# EUROPEAN PATENT SPECIFICATION

(11) **EP 1 840 043 B1**
(45) Date of publication and mention of the grant of the patent: **16.09.2009**
(21) Application number: 06006631.3
(22) Date of filing: 30.03.2006
(51) Int. Cl.: B65D 75/32

(54) **Three-dimensional packaging**
Dreidimensionale Verpackung
Emballage tridimensionnel

(43) Date of publication of application: 03.10.2007
(73) Proprietor: BRODRENE HARTMANN A/S, DK-2800 Kgs Lyngby (DK)
(72) Inventor: Frederiksen, John Hoffmann, 3500 Vaerlose (DK); Rasmussen, Torben, 2765 Smorum (DK); Bertelsen, Svend, 2630 Taastrup (DK)
(74) Representative: Hansen, Jesper Römer

(56) References cited:
- GB-A- 2 285 406
- US-B1- 6 267 252
- US-B1- 6 534 138

## Description

### TECHNICAL FIELD OF THE INVENTION

The invention relates to three-dimensional packaging products manufactured by dry-forming of airlaid fibrous materials. More particularly, the invention relates to three-dimensionally shaped packaging products obtainable by hot pressing of air-laid fluff material comprising natural fibres and no or substantially no thermosetting resin. Furthermore, the invention relates to an airlaid fibrous material and a method for forming such products.

### BACKGROUND OF THE INVENTION

WO 02/42070 discloses a method for manufacturing a thin-walled product of fibrous material with a film on one surface. The film is used as a support of a layer of fluff which layer is formed inline by treating two rolls of "fluff pulp" in a mill and distributing the loose fibrous material to the film. An adhesive is also provided on the film. The film with the fluff is shaped in a press tool having an upper part with a cavity corresponding to the outer surface of the product to be formed. The upper part is electrically heated and is equipped with small holes for evacuation of air and water vapour to reduce the pressure of gas inside the press. The lower part has an elastic layer, which may be expanded by air so as to press the film and the fluff towards the upper press part. The adhesive is fixed under pressure and heating. A separate after-pressing station may be provided after the above-discussed press to achieve improved surface finish. It should be observed that the film, which supports the layer of fluff, is integrated into the finished product. Furthermore, the surface finish of the product with the film is of limited quality, particularly with regard to smoothness.

US 4,474,846 discloses a mat with a combination of base fibres (cellulose fibres), carrier fibres (thermoplastic material) and a thermosetting ingredient. The carrier fibres are activated (i.e. bonding the base fibres together) during manufacturing of the mat by heating of the mat in an oven. The thermosetting ingredient, i.e. a phenolic resin, is not activated until subsequent three-dimensional forming of the mat in a heated press (@ 325°F to 590°F, 200 to 1000 psi, mold cycle time of one minute or less). US 4,474,846 emphasises that thermosetting resin is required for the non-woven fibrous material to be capable of being moulded into a permanently rigid form. Furthermore, US 4,474,846 does not disclose any examples with less than 5% by weight of thermosetting resin.

The phenolic resin is not desirable from an environmental point of view and a mould cycle time of about 1 minute is typically not acceptable for industrial scale manufacturing of disposable formed pulp members.

Laminated structures are briefly mentioned without specifying technical details, purpose or composition.

US 4,418,031 (parent application of US 4,474,846) is focused on the method of manufacturing the mat and the product, whereas US 4,474,846 is mainly concerned with the mat itself. The method requires a mat with cellulose-based fibres, bonding carrier fibres (thermoplastic but thermosetting is also mentioned) and a thermosetting ingredient, which is pre-treated by heating in an oven, prior to the final shaping in a compression moulding operation where the thermosetting ingredient cures. The method disclosed in US 4,418,031 (and US 4,474,846) is therefore defined in very broad terms.

US 6,267,252 discloses a filter material manufactured from a fluff by calendering (pressing is briefly described as an alternative). The fluff contains pulp fibres, moisture and at least 2% bicomponent fibres (typically made up of different thermoplastic materials (sheat/core)). At least 5% moisture should be added and the water is described as facilitating the bonding. There seems to be no indication that the calendering or pressing requires heating to become effective. The resulting product is not suitable for a packaging and does particularly not resemble a three-dimensional packaging.

### OBJECTS OF THE INVENTION

It is the object of the present invention to provide an improved three-dimensionally shaped packaging product comprising natural fibres.

In another aspect of the invention it is the object of the invention to provide a fluff material for manufacturing of a three-dimensionally shaped packaging product according to the first aspect of the invention.

In a third aspect of the invention it is the object of the invention to provide a method of manufacturing a three-dimensionally shaped packaging product according to the first aspect of the invention.

### DISCLOSURE OF THE INVENTION

One or more of the above and other objects of the invention are realised by a three-dimensionally shaped packaging product according to claim 1.

One or more of the above and other objects of the invention are similarly realised by a fluff material according to claim 4.

By three-dimensional is herein meant that the variation in height of the member is more than 5 mm. The three-dimensional packaging product typically has a variation in height of more than 10 mm, such as more than 15 mm, as this allows for more safe securing of articles held by a product according to the invention.

By packaging product is herein meant a board having cavities or compartments for receiving one or more members to be held by the product. It should be observed that packaging products also include trays and bowls for having members arranged loose in them.

The products according to the invention, which products are obtained by hot pressing of a non-woven airlaid fluff material together with water, vary from packaging products obtained by the traditional wet process by having a considerably more smooth surface, which is typically highly desirable. A smooth surface may be obtained for products obtained by the traditional wet process by after-pressing the products after drying in an oven. However, after-pressing tends to reduce the strength of the product. It could be theorised that the reduction in strength associated with after pressing is at least partially related to braking of hydrogen bondings during the after-pressing. Furthermore, products according to the present invention, which products are obtained by hot pressing, tend to have a more layered structure in that the surface is substantially more dense than the core part. This is highly desirable from a structural and application point of view as this typically leads to increased strength and better blocking properties. Due to the manufacturing process, the product has very low dimensional tolerance compared to the wet process and the surface structure of the mould is reproduced to a very high level of details in the surface of the product. Hence, it is possible to emboss a detailed pattern or mark into the product during the manufacture without the need for subsequent processing. Furthermore, the production method allows for manufacturing of a range of layered products, which are not feasible by the traditional wet process of manufacturing moulded pulp members.

### BRIEF DESCRIPTION OF THE DRAWINGS

The invention will be explained more fully below with reference to exemplary embodiments as well as the drawings, in which
Fig. 1 shows a hot press forming a fluff,
Fig. 2 shows a packaging product having a sandwich structure, and
Fig. 3 shows a hot press with a plurality of press cavities.

All the figures are highly schematic and not necessarily to scale, and they show only parts which are necessary in order to elucidate the invention, other parts being omitted or merely suggested.

### DESCRIPTION OF THE DRAWINGS

### Process - method

The overall steps of the dry process according to the invention are to provide a suitable fluff material in a press, press the fluff material while heating the fluff so that a rigid three-dimensional natural fibre member is formed. These steps are similar to those disclosed in US 4,418,031 (incorporated herein by reference), however, the fluff material and hence the product are very different particularly in that no or only a very limited amount of thermosetting resin is present in the products according to the present invention. It was found that with regard to temperature, pressure and pressing time, the processing parameters in US 4,418,031 will lead to acceptable three-dimensional packaging products.

The dry process provides a wide range of advantages over conventional wet process of manufacturing of moulded natural fibre members. The preparation of the natural fibres into a fluff material also referred to as an airlaid fibrous mat is considerably less demanding in the requirements to apparatus and workspace as compared to the manufacturing of a fibrous pulp. Particularly, the apparatus is much more flexible with regard to production of smaller batches of fluff material and final products. The use of chemicals and energy is also reduced dramatically as compared to the wet process. In many cases, the natural fibres may be prepared completely without formation of a fibre pulp, whereby the pulping chemicals may be dispensed with. Furthermore, it was surprisingly found that additives, such as surfactants, used in connection with the method according to the present invention may be applied in lower amounts or more environmentally friendly additives may be used. Since the water content is substantially lower for the members in the dry process, the drying requires only a fraction of the energy. Process modelling has shown that manufacturing by the dry process according to the present invention only requires about 1/6 to 1/10 of the energy required to manufacture similar products by the traditional wet-forming method. Furthermore, change of composition of the product is usually much more flexible and faster for the dry process, as virtually no cleaning of the apparatus is required for the change.

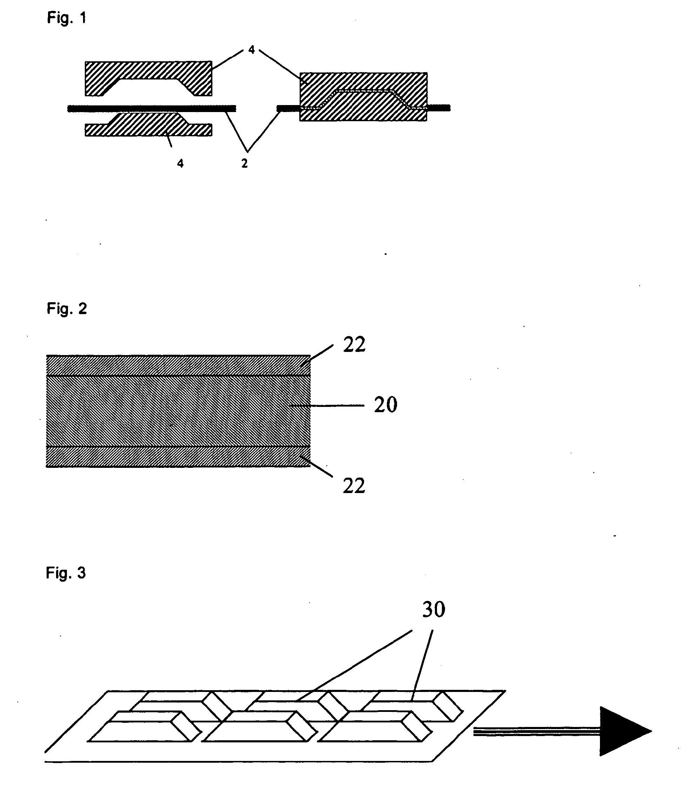

In a preferred embodiment shown in Fig. 1, the main pressing tool has rigid pressing surfaces, such as steel, aluminium or metal alloy surfaces. The use of a rigid tool allows for fast heat transfer between the tool surface and the fluff material. It was found that the surface of the three-dimensionally shaped packaging products closely resembled the surface of the mould surface and hence a very smooth surface finish may be realised as compared to products obtained by the traditional wet method. Furthermore, reproducibility of the dimensions, in particular the thickness and width of the product is significantly increased over the wet process.

A three-dimensionally shaped packaging product may for example be manufactured by providing a fluff material 2, adjusting water content of the fluff material 2, shaping the fluff material 2 by pressing the fluff material in the heated press 4 (second part of Fig. 1) and thereafter releasing the pressed fluff material from the press. In some cases, the edges of the product may be adjusted by cutting into a final shape during the pressing or afterwards.

The pressure in the main press depends on the type of fluff, the product to be manufactured and other processing parameters, such as pressing time and temperature. Typically, the strength of the packaging products increases with increasing pressure. It was found that in general a pressure in the order of 2 - 35 kg/cm², would lead to reasonable product strength and hence sufficiently rigid products.

The temperature and heat capacity of the main press should be sufficient to ensure a rapid and almost momentary evaporation of the water in the fluff. It has been found that this may be realised for press parts of steel or aluminium with Teflon coatings when the temperature of the pressing tools is around 150 to 300°C.

In a preferred embodiment exemplified in Fig. 3, the main press is provided with a plurality of press cavities 30, which are operated simultaneously by one press. The arrow in Fig. 3 indicates the overall movement of the airlaid material through the system. A cavity may be arranged parallel to another cavity, i.e. in the direction where three protruding members are arranged in Fig. 3. In another embodiment, a cavity may be arranged orthogonal to another cavity, i.e. in the direction where two protruding members are arranged in Fig. 3. In a further embodiment, the cavities are displaced by a combination of parallel and orthogonal translation e.g. forming a triangular pattern (not shown). It is preferred that the number of cavities is one, two, three, four or even more. In general, the advantage of having more than one press cavity in one press is a substantially proportional decrease in the average manufacturing cycle time per product. Furthermore, considerable space is saved by having one press with a plurality of press cavities compared to a number of parallel production lines. Further, the energy loss is reduced and the overall cost of the production facility is reduced as only one press is required and the number of optional pre- and after-treatment stations, such as pre-heater and cutting station, may also be limited.

Experimental work has shown that for systems with a press having a plurality of press cavities as shown in Fig. 3, it is highly advantageous to take special considerations with regard to arrangement of the fluff when it is provided into the press. Particularly, it has been found that the fluff may advantageously be arranged so that it forms a depot of fluff between adjacent press cavities. Examples of depots are vertical loops and wrinkles. Preferably the depots comprise U-shaped, Ω-shaped, S-shaped, Z-shaped or zigzag-shaped parts of fluff band. The depot allows the fluff to be formed and shrinked during the pressing without affecting adjacent members formed in neighbouring press cavities. In a preferred embodiment, the fluff material is compressed in the machine direction or the transverse direction during manufacturing of the fluff material. In many cases, this would reduce the requirement for providing of depots of fluff when pressing with a press having several press cavities. In this case, it is preferred that the fluff is creped, waved / provided with waves orthogonal to the overall surface of the fluff with a period of 1 to 10 mm.

### Preferred types of fluff compositions

The main component of the fluff is natural fibres, such as virgin cellulose-based fibres, recycled fibres, such as recycled paper fibres, recycled craft, recycled carton, recycled milk cartons, recycled sackcloth, TMP, newspapers or magazines, or one year crops, such as cotton, jute or straw. The natural fibres may be untreated or treated chemically and/or mechanically (referred to as CTMP). The fibres may be treated to reduce or substantially remove lignin, which will reduce the likelihood of discoloration but also prevent a contribution from lignin to the strength of the final product.

In addition to natural fibres, the fluff may comprise a wide range of components, but the most important ones are thermoplastic fibres and adhesive.

### Thermoplastic material

Thermoplastic material - typically thermoplastic fibres - becomes tacky and soften upon heating. These fibres increase the strength and handleability of the fluff material at room temperature after manufacturing of the fluff. Furthermore, thermoplastic fibres increase the formability of the fluff in the sense that the fluff may be stretched to a greater extent without failing when the content of thermoplastic fibres is increased.

A particularly advantageous type of thermoplastic fibres is bicomponent fibres, more particularly bicomponent fibres with a core of a thermoplastic material that softens at a relatively high temperature and a surface layer that softens at a relatively low temperature. This leads to a very sticky fibre, which still has a considerable mechanical strength - a combination that allows for relatively high formability of the fluff at very low content of thermoplastic fibres. The content of the synthetic thermoplastic fibre is environmentally and commercially a very important parameter. Environmentally, as the synthetic fibre requires considerable energy on manufacturing, and commercially, as paper fibre members with less than 5% synthetic material in Germany according to the Grüne Punkte requirements may be treated as paper and hence do not require special treatment upon disposal. It should be observed that for example native starch is not considered a synthetic material in this regard.

A wide range of thermoplastic fibres may be used according to the invention, but it has been found that the following thermoplastic fibres are particularly advantageous for the products and methods according to the invention: PE fibres, PE/PP bico fibres, PET/PE bico fibres and combinations thereof. Preferably, the thermoplastic fibres are bicomponent thermoplastic fibres and of these fibres, the more preferred are surface/core-arranged bicomponent thermoplastic fibres with a relatively low melting surface part. Another type of preferred thermoplastic fibres are bio-degradable plastics, such as for example PLA-fibres.

### Adhesive

Adhesive should be understood in the sense of components that may transform into another more stable component upon chemical reaction. The chemical reaction may involve water, oxygen, other components or be a self-contained reaction. The reaction may e.g. be activated by heating (received during pressing), by addition of a catalyst (received shortly prior to pressing) or adhesive may be added to the fluff shortly prior to pressing, e.g. by spraying or using printing rolls, or as a sheet material introduced to the press together with the fluff. In general, the adhesive is added to increase the rigidity of the packaging product after hot pressing. The content and type of adhesive as well as the method of providing the adhesive may vary considerably, dependent e.g. on the composition of the fluff, the pressing time, temperature and pressure.

A wide range of adhesives may be used according to the invention, but it has been found that the following adhesives are particularly advantageous for the products and methods according to the invention: starch, gelatine, flour, such as wheat flour, sugar, acrylic dispersions, SBR dispersions, EVA dispersions and other similar dispersions. Starch is meant to include adhesives derived from starch such as dextrin and modified starch.

By starch is herein meant native starch as well as chemically modified starch, such as co-polymerised starch, (partially) substituted starch and/or physically modified starch, such as pregelatinised starch. It is preferred to use native starch due to the low price and high availability or pregelatinised starch due to the solubility in cold water.

Surprisingly, it was found that particularly for adhesives, which were sprayed onto the surface e.g. in suspensions prior to pressing, the surface finish was particularly smooth. This was particularly the case for suspensions based on starch.

### Thermosetting resin

The fluff material as well as the packaging product may comprise small amounts of thermosetting resin, such as fenolic resin. However, it is highly preferred that the fluff material or the packaging product comprises substantially no thermosetting resin, as thermosetting resin reduces the moulding cycle time and provides an environmental issue with regard to working environment as well as disposal of the packaging products.

It should be observed that adhesive differs from thermosetting resin in that the thermosetting resin upon activation or curing undergoes a cross linking process wherein the resin forms a network primarily between the chemical entities of the thermosetting resin and that after complete curing of the thermosetting resin, the thermosetting resin may not be reactivated.

### Manufacture of airlaid fluff material

The fluff material is typically prepared by mixing the natural fibres with thermoplastic fibres and/or adhesive in a for example a hammer mill or a saw mill. Thereafter, the fibrous mixture is arranged on a carrier layer and heated to activate the thermoplastic fibres so that the fluff forms a coherent open homogeneous material. The manufacturing of fluff material is for example described in US 4,418,031.

A number of fluff types and compositions constitute preferred embodiments.

### a) With thermoplast and adhesive

A basic composition for a fluff material or a packaging product according to the invention comprises natural fibres and less than 15% by dry weight thermoplastic fibres, preferably 0.25 - 10% by dry weight thermoplastic fibres and more preferably 0.5 - 5% by dry weight thermoplastic fibres. Furthermore, the composition comprises less than 10% by dry weight adhesive and preferably less than 5% by dry weight adhesive. Finally, minor amounts of thermosetting resin may be present, such as less than 2% by dry weight of thermosetting resin, preferably less than 1% by dry weight of thermosetting resin, and most preferably substantially not comprising thermosetting resin.

In a highly preferred embodiment, the sum of thermoplastic fibres and adhesive is less than 10% by dry weight, preferably the sum of thermoplastic fibres and adhesive is between 1 to 5% by dry weight. Particularly, it was found that a composition having less than 2.5% by weight of adhesive and preferably the packaging product comprising less than 2.5% starch provided very cheap and yet relatively rigid packaging products

The adhesive may be incorporated into the fluff or it may be added, e.g. by spray, as a solution or a suspension shortly prior to the pressing.

This type of fluff composition could advantageously be pressed in a one step operation in a rigid press, as the formability is typically very good and increasing with the amount of thermoplastic fibres.

### b) With thermoplastic fibres but no additional adhesive (lignin)

For fluff compositions with fibres having a considerable lignin content, a preferred type of fluff compositions is those with no added adhesive. Instead, the natural lignin of the fibres is activated to form a setting bonding between the fibres.

A preferred composition comprises natural fibres and less than 15% by dry weight thermoplastic fibres, preferably 0.25 - 10% by dry weight thermoplastic fibres and more preferably 0.5 - 5% by dry weight thermoplastic fibres. Furthermore, the composition may comprise less than 2% by dry weight of thermosetting resin, preferably less than 1% by dry weight of thermosetting resin, and most preferably substantially not comprising thermosetting resin. Finally, the composition comprises substantially no additional adhesive.

This type of compositions is more environmentally friendly, as the adhesive is not needed and the lignin need not be removed chemically from the fibre material prior to use of the natural fibres. Furthermore, the step of adding the adhesive can naturally be omitted leading to a process having fewer steps. However, the process must be controlled more carefully, as the activation of lignin may lead to discoloration and should take place within a relatively narrow temperature and time frame.

### c) With adhesive but no thermoplastic fibres

In some cases, it is desirable to omit the thermoplastic material due to environmental demands or to reduce the cost of the product. This leads to a fluff, which provides limited formability and hence such fluff materials are primarily suitable for products with limited variation in height and no sharp corners. It has been found that providing an inert and substantially inelastic textile layer in contact with the fluff during pressing may increase the formability of such fluff compositions and prevent undue local thinning of the product. In other words, a more uniform formability is realised.

An example of such a composition comprises natural fibres and 2% to 10% by dry weight adhesive, preferably 5% to 8% by dry weight adhesive. Furthermore, the composition may comprise less than 2% by dry weight of thermosetting resin, preferably less than 1% by dry weight of thermosetting resin, and most preferably substantially not comprising thermosetting resin. Finally, the composition comprises substantially no thermoplastic fibres.

### d) With surfactant

Surprisingly it was found that when a surfactant is added during the manufacturing of the fluff material, the amount required to realise the desired effect may often be reduced. This is particularly the case for hydrophobic surfactants such as AKD. When AKD is provided to the pulp for wet forming of moulded pulp members, it is typically required to utilise about 3% by weight AKD for the member to become hydrophobic. However it was found that when AKD was introduced into the fluff material during preparation of the fluff as little as 0.1 to 0.4% by weight of AKD resulted in the packaging product being hydrophobic. This is a major advantage due to reduced environmental impact as well as reduced cost.

### Water content - effect during pressing

Water present in the fluff upon pressing may have been provided during formation of the fluff and bound to the fibres or another component of the fluff, it may have been added via humidity of the atmosphere where the fluff has been stored or the water may have been added just prior to pressing. Typically, the water content upon initiation of the pressing should be in the order of 0 to 50% by total weight, preferably 5 to 35% by total weight. By total weight is meant the sum of dry weight and water.

Water added just prior to pressing is preferably provided as a water mist, as spray, by dripping liquid, as steam or via a wet roll, also referred to as printing rolls, however, it is preferred to add the water by spray as this allows for a controlled distribution and good control of the added volume of water.

The effect of the water appears to be rather complex, but it could be theorised that the following effects may be of significant importance:

### a) Heat conduction

Since water and water vapour conduct heat relatively well and have relatively high heat capacities, it is most likely that presence of controlled amounts of water is required to realise a suitable heat distribution within the fluff material during pressing.

### b) Chemical reaction

Some of the curing reactions of the adhesives involved in realising a stable, rigid three-dimensional natural fibre member involve chemical reaction with water. In these cases, presence of water and the distribution of the water are essential for formation of a suitable structure. Furthermore, water facilitates formation of hydrogen bindings in between the fibres.

### c) Internal pressure / temperature

During the pressing, some of the water in the fluff material evaporates, which increases the gas pressure in the fluff. At the same time, the fluff is compressed in the press and the combined effect leads to a substantial increase in the water vapour pressure and hence increase in the heat conductivity of the fluff structure in the press. This leads to a reduction of the pressing time.

### Product

The product is to a large extent defined by the combination of fluff used and the pressing process. Typically, the final product is a rigid three-dimensional natural fibre member with a very fine surface finish and mechanical properties comparable to or better than wet-method pulp members based on the same natural fibre composition.

The products are characteristic in the very fine surface finish. The press surface is rendered with a very high accuracy on the product.

### Shock absorbing zone

In a highly preferred embodiment, the three-dimensionally shaped packaging product according to the invention is provided with at least one shock-absorbing zone. The shock-absorbing zone preferably comprises an area where the packaging product is pressed lighter, i.e. less hard, during hot pressing than other parts of the packaging product during manufacturing of the packaging product. The shock-absorbing zone(s) is preferably formed by having an area where the distance between the moulding parts is larger than between the rest of the mould area. The areas forming shock-absorbing zones may correspond to the initial thickness of the fluff material, however, it is preferred that the fluff material in the shock-absorbing zones is partially pressed during the hot pressing, as this provides for a better coherence in the shock-absorbing zones. The shock-absorbing zone protrudes typically from the surface of the packaging product and is more flexible than the bulk of the packaging product. The shock-absorbing zones may e.g. be shaped as protruding dots or as lines or smaller areas. It is highly preferred that the shock-absorbing zones are arranged in an area of the packaging product, which area forms a connection between the packaging product and the member to be packed in the packaging product during use.

### De-nesting means

The packaging product according to the invention has a very smooth surface and highly reproducible dimensions. When stacked, also referred to as nested, the products may therefore be relatively difficult to separate, also referred to as de-nest, from one another. It is therefore highly advantageous to provide at least one protrusion on the surface of the packaging product to facilitate de-nesting of a stack of packaging products. It is highly preferred to have the protrusion comprised by an area where the packaging product is pressed lighter, i.e. less hard than other parts of the packaging product during manufacturing of the packaging product by hot pressing. This is preferably realised by having an area where the distance between the moulding parts is larger than between the rest of the mould area, for example by having a corresponding depression in at least one of the mould surfaces.

The at least one protrusion is preferably arranged in an area of the packaging product, which area does not form part of a display surface of the product, and/or in an area of the packaging product, which area does not form part of a support surface of the packaging product during use. This allows for the visual impression not being deteriorated by the protrusion and that the packaging product may stand stable during use. An example of a suitable position of a protrusion for facilitating de-nesting of a bowl-shaped packaging product is on the outer side surface of the bowl. However, in many cases, arrangement of the protrusion for facilitating de-nesting may be arranged on the bottom of the packaging product.

### Products with a layered structure

Surprisingly it was found that by providing one or more elements or additional layers of fluff material in addition to the main fluff material layer, a laminated structure with a good interlayer integrity is formed. The layers may all be introduced as they are into the pressing tool, or adhesive, water or another additive may be provided between at least two layers. Typically, adhesive or other additives are provided to further enhance the connection between the layers. However, in many cases, such additives between the layers are not needed.

The further element(s) may be provided as continuous bands or layers, or the elements may be provided as one or more separate sheets, lumps, particulate material or as a fluid.

The further element(s) is preferably added prior to the main press, but in some cases, e.g. if the further element is heat sensitive, the further element may be added after the main press, such as in connection with optional after-pressing.

The further elements may consist of the same material as the main fluff, the further element may comprise one or more elements of the main fluff or the further element may be of a completely different composition or nature than the main fluff.

In the following, preferred embodiments of classes of laminated products are described.

### a) Barrier layers

In a preferred embodiment, one or more layers are provided on the inner and/or the outer surface of the member to form a barrier layer. The barrier layer may e.g. prevent migration of water vapour, smell, oxygen, and fluid, such as water or oil, through the product. Examples of barrier layers are thermoplastic films, such as polyethylene-based material or another plastic layer or foil, and wax.

### b) Affordable core material

Another application of layering is combinations of an affordable core material with one or more surface layers of fluff material, labelling material or colour sheet, whereby a higher aesthetic value of the overall product is realised at e.g. reduced cost or reduced environmental impact. For example, a recycled non-bleached or reinforced pulp material may form the core while virgin or bleached fibres may be used for a thin surface layer. Thereby a final product with the same visual appearance as a fully virgin fibre product but at reduced cost may be provided. Furthermore, such layered products are typically more environmentally friendly, as a greater content of recycled fibres or less new or chemically treated fibres have to be utilised. In addition, strong but less aesthetically acceptable fibres may be combined with a thin layer of aesthetically preferred fibres, thereby allowing for a reduced product weight at the same mechanical performance. An example is addition of one or more layers of cheap tissue substantially consisting of cellulose fibres to be incorporated into the product.

### c) Enforcement in specific areas

A third application is a reinforcement layer or a partial reinforcement layer for specific areas. This is typically advantageous if only some areas of the fluff are stretched and hence thinned out during pressing of the member. Such highly stretched areas may advantageously be reinforced by additional layers, such as bands or pieces of material, which may or may not have the same composition as the main fluff.

Another type of reinforcement is applicable, where a part of the final product (stretched during manufacturing or not) will be highly loaded during application. In that case, this part is advantageously reinforced by adding pieces, bands or similar of fluff or other reinforcement material.

In a particularly preferred embodiment, one or more bands relatively narrow compared to the main fluff or relatively narrow to a width of the main press are added, preferably parallel to or orthogonal to a longitudinal direction of the main fluff. Thereby for example bottom parts, corners or edges may be reinforced without providing unnecessary material for areas of the final product, which are sufficiently strong based on the main fluff.

### d) Sandwich structure

In a particular embodiment, the wall of the product forms a sandwich structure as indicated schematically in Fig. 2. The sandwich structure has relatively stiff surface layers 22 and a relatively soft core 22. In a preferred embodiment, the different layers are formed by combining three layers of fluff parallel to sections a) and b) above. In another embodiment, the layers are formed from the same fluff and the variations of properties are achieved during processing. For example, spraying of a suspension of adhesive, such as suspended starch, onto the surface of the fluff will leave more adhesive and water at the surface than in the core of the fluff. During pressing, the adhesive will hence be concentrated near the surfaces and for the desired sandwich structure. Similar effects may be realised for other adhesives or for lignin containing fluffs based on the distribution of water.

### e) Paper layer or label

In a particularly preferred embodiment, a further layer or partial layer forming a label of the product is provided. The layer is preferably based on paper and may comprise a display surface optionally having information presented thereon or the layer may be adapted for being printed directly in an optional later step of manufacturing.

### f) Aesthetic layer

The additional layer(s) may be of a higher aesthetic value than a bulk part of the packaging product. Typically layers having a higher aesthetic value are more costly and by forming only a smaller portion of the product by such more costly material, the overall cost of the product will be lower than if the whole product was formed by the material having a higher aesthetic value. Preferred example of layers having a higher aesthetic value is coloured fluff material or virgin paper fibres. In these cases, the use of only a layer of such material will also be an environmental advantage over the situation where the whole product is formed by such high aesthetic material as typically such materials require more energy and chemical intensive treatment in the manufacture as compared to e.g. recycled paper fibres.

### e) Hydrophobic layer

In some applications of the products according to the invention it is required that the products are hydrophobic or at least partially water repellent. For such applications, it is preferred to provide a hydrophobic layer at the surface of the product. The layer may be formed by a layer, which itself is hydrophobic, such as a layer being formed by a fibre composition comprising AKD or another hydrophobic surfactant in sufficiently high concentration to provide hydrophobic properties to the layer. In another embodiment, the layer is formed by providing a hydrophobic composition or substance directly to the surface of the fluff prior to the hot pressing so that the surfactant is integrated into the outer surface of the product. This allows for a reduced use of surfactant as compared to making the whole product from a composition being hydrophobic.

### Examples

In a preferred embodiment, a three-dimensionally shaped packaging product comprises 88 - 98% by dry weight natural fibres, such as 95% by dry weight CMTP, 2 - 10% by dry weight thermoplastic fibres, such as 5% by dry weight PE/PP bicofibres. Prior to pressing, the water content is adjusted to 5% by total weight. By pressing for 0.2 seconds it was possible to obtain a product having similar strength as a member with the same natural fibre composition prepared by traditional wet forming.

In another embodiment, a three-dimensionally shaped packaging product comprises 88 - 98% natural fibres, such as 95% bleached or unbleached cellulose, and 3 - 12% starch, such as 5% native potato starch, which were added by spraying of a suspension to the surfaces of the fluff. As the composition does not have any thermoplastic fibres, the fluff is not as formable as in the previous example. The formability may be increased by positioning a non-elastic web of inelastic textile, such as Gardisette or another wowen or knitted cotton-based material, in contact with the fluff. The web is separated from the product after hot pressing and may be reused. A sandwich structure was formed during pressing and the surface of the finished product was very smooth. Despite the lack of thermoplastic fibres, surprisingly the final product has mechanical properties similar to those of an equivalent natural fibre composition manufactured by the traditional wet method even though the fluff band was substantially weaker prior to hot pressing.

In a further example, a three-dimensionally shaped packaging product comprises 85 - 95% natural fibres, such as recycled office waste, 3 - 8% starch powder or wheat flour, and 2.5 - 8% thermoplastic fibres, such as about 5% Bicofibres. Latex, such as acryl latex, may be added to improve wet strength of the product. AKD or another hydrophobe surfactant may be added to provide the product with resistance towards water absorption.

In a still further example, a layered product having three layers is manufactured. The natural fibres of the outer layers are virgin cellulose fibres and each outer layer account for about 20% by dry weight of the complete three-dimensionally shaped packaging product. The natural fibres of the centre layer are recycled newspapers and magazines. Smaller amounts of thermoplastic fibres, such as about 3% by weight of bicofibres, and/or adhesive, such as about 3% wheat flour, may be present in the fluff materials. The layers are provided into the hot mould as three separate sheets of airlaid fluff material rolls after water is added. The product is formed by hot pressing and strength and colour about the same as for a product of the same weight formed substantially from virgin cellulose fibres may be realised. However, the surface finish is more smooth and due to the use of the core of much cheaper recycled newspaper and magazines the material cost is reduced by as much as about 25 - 50%.

## Claims

1. A three-dimensionally shaped packaging product made by hot pressing of a non-woven airlaid fluff material together with water, said packaging product composting
- natural fibres,
- less than 15% by dry weight thermoplastic fibres, preferably 0.25 - 10% by dry weight thermoplastic fibres, more preferably 0.5 - 5% by dry weight thermoplastic fibres,
- less than 10% by dry weight adhesive, preferably less than 5% by dry weight adhesive, and
- less than 2% by dry weight of thermosetting resin, preferably less than 1% by dry weight of thermosetting resin, and most preferably substantially not comprising thermosetting resin.

2. Packaging product according to claim 1, wherein the sum of thermoplastic fibres and adhesive is less than 10% by dry weight, preferably the sum of thermoplastic fibres and adhesive is between 1 to 5% by dry weight.

3. Packaging product according to claim 1 or 2, comprising less than 2.5% by weight of adhesive, preferably the packaging product comprising less than 2.5% starch.

4. A packaging product made by hot pressing at least one non-woven airlaid material together with water and at least one layer of inelastic textile being arranged between said airlaid material and at least one press part during pressing, said packaging product comprising
- natural fibres,
- 2% to 10% by dry weight adhesive, preferably 5% to 8% by dry weight adhesive,
- less than 2% by dry weight of thermosetting resin, preferably less than 1% by dry weight of thermosetting resin, and most preferably substantially not comprising thermosetting resin, and
- substantially no thermoplastic fibres.

5. Packaging product according to any one of the preceding claims wherein the packaging product is hydrophobic and comprises 0.1 to 1% hydrophobic surfactant, preferably the packaging product comprises 0.1 to 0.6% hydrophobic surfactant, more preferably, the packaging product comprises 0.1 to 0.6% AKD.

6. Packaging product according to any one of the preceding claims further comprising at least one shock-absorbing zone, preferably the shock-absorbing zone comprises an area where the packaging product is pressed lighter than other parts of the packaging product during manufacturing of the packaging product by hot pressing.

7. Packaging product according to claim 6, wherein the at least one shock-absorbing zone is arranged to form a connection between the packaging product and an object to be packed in the packaging product during use.

8. Packaging product according to any one of the preceding claims further comprising at least one protrusion to facilitate de-nesting of the packaging products, preferably the protrusion comprises an area where the packaging product is pressed lighter than other parts of the packaging product during manufacturing of the packaging product by hot pressing.

9. Packaging product according to claim 8, wherein the at least one protrusion is arranged in an area of the packaging product not forming part of a display surface of the product and/or in an area of the packaging produce not forming part of a support surface of the packaging product during use.

10. Packaging product according to claims 1 to 9, wherein the thermoplastic fibres are bicomponent fibres, preferably with a first relatively high-melting core thermoplastic material and a second relatively low-melting surface thermoplastic material.

11. Packaging product according to any one of the claims 1 to 10, having a layered structure.

12. Packaging product according to claim 11, having at least one first layer comprising natural fibres and at least one second layer, each second layer being selected from the group consisting of
- a barrier layer, such as a polyethylene-based material,
- a plastic layer,
- a hydrophobic composition or a layer comprising a hydrophobic composition,
- a cover layer of higher aesthetic value than the first layer, such as a layer comprising virgin paper fibres,
- a reinforcing layer or partial layer, such as a partially covering layer comprising natural fibres,
- a paper layer or a label,
- a layer of coloured fluff material.

13. Packaging product according to claim 11 or 12, wherein the packaging product forms a sandwich structure so that an inner and an outer surface part of the packaging product have higher stiffness or better appearance than a core part of the packaging product

14. A fluff material for manufacturing a three-dimensionally shaped packaging product according to claim 1, comprising a homogeneous non-woven airlaid collection of
- natural fibres,
- less than 15% by dry weight thermoplastic fibres, preferably 0.25 - 10% by dry weight thermoplastic fibres, more preferably 0.5 - 5% by dry weight thermoplastic fibres,
- less than 10% by dry weight adhesive, preferably less than 5% by dry weight adhesive, and
- less than 2% by dry weight of thermosetting resin, preferably less than 1% by dry weight of thermosetting resin, and most preferably substantially not comprising thermosetting resin.

15. Fluff according to claim 14, comprising less than 2.5% by weight of adhesive, preferably the packaging product comprising less than 2.5% starch.

16. A fluff material according to claim 14 comprising substantially no thermoplastic fibres.

17. A fluff material according to claim 14 comprising substantially no adhesive.

18. Fluff according to any one of the claims 14 to 17, further comprising 0.1 to 1% hydrophobic surfactant, preferably the fluff comprising 0.1 to 0.6% hydrophobic surfactant, more preferably, the fluff comprising 0.1 to 0.6% AKD.

19. Fluff according to any one of the claims 14 to 18, wherein the fluff is compressed in a machine direction or a transverse direction, preferably the fluff is creped or waved with a period of 1 to 10 mm.

20. Fluff according to any one of the claims 14 to 19, wherein the thermoplastic fibres are bicomponent fibres, preferably with a first relatively high-melting core thermoplastic material and a second relatively low-melting surface thermoplastic material.

## Patentansprüche

1. Ein dreidimensional geformtes Verpackungsprodukt, hergestellt durch Heisspressung eines nichtgewebten Airlaid-Fluffzellstoffmaterials zusammen mit Wasser, welches besagte Verpackungsprodukt folgendes umfasst:
- natürliche Fasern,
- weniger als 15 Trockengewichtsprozent thermoplastische Fasern, vorzugsweise 0,25-10 Trockengewichtsprozent thermoplastische Fasern, mehr vorgezogen 0,5-5 Trockengewichtsprozent thermoplastische Fasern,
- weniger als 10 Trockengewichtsprozent Haftmittel, vorzugsweise weniger als 5 Trockengewichtsprozent Haftmittel,
- weniger als 2 Trockengewichtsprozent wärmehärtendes Harz, vorzugsweise weniger als 1 Trockengewichtsprozent wärmehärtendes Harz, und meist vorgezogen im Wesentlichen kein wärmehärtendes Harz.

2. Verpackungsprodukt gemäss Anspruch 1, wo die Summe der thermoplastischen Fasern und des Haftmittels weniger als 10 Trockengewichtsprozent beträgt, indem die Summe der thermoplastischen Fasern und des Haftmittels vorzugsweise zwischen 1 bis 5 Trockengewichtsprozent beträgt.

3. Verpackungsprodukt gemäss Anspruch 1 oder 2, welches Verpackungsprodukt weniger als 2,5 Gewichtsprozent Haftmittel umfasst, indem das Verpackungsprodukt vorzugsweise weniger als 2,5% Stärke umfasst.

4. Ein Verpackungsprodukt, hergestellt durch Heisspressung mindestens eines nichtgewebten Airlaid-Materials zusammen mit Wasser, wo während der Pressung mindestens eine Schicht unelastischer Webstoff zwischen dem besagten Airlaid-Material und mindestens einem Pressteil angebracht ist, welches Verpackungsprodukt folgendes umfasst:
- natürliche Fasern,
- 2 bis 10 Trockengewichtsprozent Haftmittel, vorzugsweise 5 bis 8 Trockengewichtsprozent Haftmittel,
- weniger als 2 Trockengewichtsprozent wärmehärtendes Harz, vorzugsweise weniger als 1 Trockengewichtsprozent wärmehärtendes Harz, und meist vorgezogen im Wesentlichen kein wärmehärtendes Harz, und
- im Wesentlichen keine thermoplastischen Fasern.

5. Verpackungsprodukt gemäss einem jeglichen der vorhergehenden Ansprüche, wo das Verpackungsprodukt wasserabweisend ist und 0,1 bis 1% wasserabweisenden oberflächenaktiven Stoff umfasst, indem das Verpackungsprodukt vorzugsweise 0,1 bis 0,6% wasserabweisenden oberflächenaktiven Stoff umfasst, und das Verpackungsprodukt mehr vorgezogen 0,1 bis 0,6% AKD umfasst.

6. Verpackungsprodukt gemäss einem jeglichen der vorhergehenden Ansprüche, welches Verpackungsprodukt weiterhin mindestens eine stossdämpfende Zone umfasst, indem die stossdämpfende Zone vorzugsweise einen Bereich umfasst, wo das Verpackungsprodukt während der Herstellung des Verpackungsprodukts durch Heisspressung leichter gepresst wird als andere Teile des Verpackungsprodukts.

7. Verpackungsprodukt gemäss Anspruch 6, wo die mindestens eine stossdämpfende Zone so angebracht ist, dass sie bei Gebrauch eine Verbindung zwischen dem Verpackungsprodukt und einem Gegenstand bildet, der im Verpackungsprodukt verpackt werden soll.

8. Verpackungsprodukt gemäss einem jeglichen der vorhergehenden Ansprüche, welches Verpackungsprodukt weiterhin mindesten einen Vorsprung umfasst zur Erleichterung des Entnestens der Verpackungsprodukte, indem der Vorsprung vorzugsweise einen Bereich umfasst, wo das Verpackungsprodukt während der Herstellung des Verpackungsprodukts durch Heisspressung leichter gepresst wird als andere Teile des Verpackungsprodukt.

9. Verpackungsprodukt gemäss Anspruch 8, wo der mindestens eine Vorsprung in einem Bereich des Verpackungsprodukts angebracht ist, der keinen Teil einer sichtbaren Fläche des Produkts bildet, und/oder in einem Bereich des Verpackungsprodukts, der keinen Teil einer Auflagefläche des Verpackungsprodukts bei Gebrauch bildet.

10. Verpackungsprodukt gemäss Anspruch 1 bis 9, wo die thermoplastischen Fasern Zweikomponentenfasarn sind, vorzugsweise mit einem ersten thermoplastischen Material mit relativ hochschmelzendem Kern und einem zweiten thermoplastischen Material mit relativ niedrigschmelzender Oberfläche.

11. Verpackungsprodukt gemäss einem jeglichen der Ansprüche 1 bis 10, welches Verpackungsprodukt eine Schichtstruktur aufweist.

12. Verpackungsprodukt gemäss Anspruch 11, welches Verpackungsprodukt mindestens eine erste Schicht aufweist, die natürliche Fasern umfasst, und mindestens eine zweite Schicht, indem jede zweite Schicht ausgewählt ist aus der Gruppe bestehend aus
- einer Barriereschicht, wie z.B. einem Polyethylen-basierten Material,
- einer Kunststoffschicht,
- einer wasserabweisenden Zusammensetzung oder einer Schicht, die eine wasserabweisende Zusammensetzung umfasst,
- einer Deckschicht von höherem ästhetischem Wert als die erste Schicht, wie z.B. einer Schicht, die Primärfaserpapier umfasst,
- einer Verstärkungsschicht oder Teilschicht, wie z.B. einer Teildeckschicht, die natürliche Fasern umfasst,
- einer Papierschicht oder einem Etikett,
- einer Schicht aus gefärbtem Fluffzellstoffmaterial.

13. Verpackungsprodukt gemäss Anspruch 11 oder 12, wo das Verpackungsprodukt eine Sandwichkonstruktion bildet, sodass ein inneres und ein äusseres Oberflächenteil des Verpackungsprodukts eine höhere Steifigkeit oder ein besseres Aussehen besitzt als ein Kernteil des Verpackungsprodukts.

14. Ein Fluffzellstoffmaterial zur Herstellung eines dreidimensional geformten Verpackungsprodukts gemäss Anspruch 1, welches eine homogene nichtgewebte Airlaid-Sammlung umfasst von
- natürlichen Fasern,
- weniger als 15 Trockengewichtsprozent thermoplastischen Fasern, vorzugsweise 0,25-10 Trockengewichtsprozent thermoplastischen Fasern, mehr vorgezogen 0,5-5 Trockengewichtsprozent thermoplastischen Fasern,
- weniger als 10 Trockengewichtsprozent Haftmittel, vorzugsweise weniger als 5 Trockengewichtsprozent Haftmittel,
- weniger als 2 Trockengewichtsprozent wärmehärtendem Harz, vorzugsweise weniger als 1 Trockengewichtsprozent wärmehärtendem Harz, und meist vorgezogen im Wesentlichen kein wärmehärtendes Harz.

15. Fluffzellstoff gemäss Anspruch 14, welcher Fluffzellstoff weniger als 2,5 Gewichtsprozent Haftmittel umfasst, indem das Verpackungsprodukt vorzugsweise weniger als 2.5% Stärke umfasst.

16. Ein Fluffzellstoffmaterial gemäss Anspruch 14, welches im Wesentlichen keine thermoplastischen Fasern umfasst.

17. Ein Fluffzellstoffmaterial gemäss Anspruch 14, welches im Wesentlichen kein Haftmittel umfasst.

18. Fluffzellstoff gemäss einem jeglichen der Ansprüche 14 bis 17, welcher Fluffzellstoff weiterhin 0,1 bis 1% wasserabweisenden oberflächenaktiven Stoff umfasst, indem der Fluffzellstoff vorzugsweise 0,1 bis 0,6% wasserabweisenden oberflächenaktiven Stoff umfasst, und der Fluffzellstoff mehr vorgezogen 0,1 bis 0,6% AKD umfasst.

19. Fluffzellstoff gemäss einem jeglichen der Ansprüche 14 bis 18, wo der Fluffzellstoff in Maschinenrichtung oder Querrichtung komprimiert ist, indem der Fluffzellstoff vorzugsweise mit einer Periode von 1 bis 10 mm gekreppt oder gewellt ist.

20. Fluffzellstoff gemäss einem jeglichen der Ansprüche 14 bis 19, wo die thermoplastischen Fasern Zweikomponentenfasern sind, vorzugsweise mit einem ersten thermoplastischen Material mit relativ hochschmelzendem Kern und einem zweiten thermoplastischen Material mit relativ niedrigschmelzender Oberfläche.

## Revendications

1. Produit d'emballage en forme tridimensionnelle fait par moulage à chaud d'une matière de fluff Airlaid non-tissée avec de l'eau, ledit produit d'emballage comprenant
- des fibres naturelles,
- moins de 15% en poids sec de fibres thermoplastiques; préférablement de 0.25 à 10% en poids sec de fibres thermoplastiques et plus préférablement de 0.5 à 5% en poids sec de fibres thermoplastiques,
- moins de 10% en poids sec d'adhésif; préférablement moins de 5% en poids sec d'adhésif, et
- moins de 2% en poids sec de résine thermodurcissable: préférablement moins de 1 % en poids sec de résine thermodurcissable et plus préférablement ne comportant substantiellement pas de résine thermodurcissable.

2. Produit d'emballage selon la revendication 1, la somme de fibres thermoplastiques et d'adhésif étant inférieure à 10% en poids sec; préférablement, la somme de fibres thermoplastiques et d'adhésif étant entre 1 à 5% en poids sec.

3. Produit d'emballage selon les revendications 1 ou 2, comprenant moins de 2.5% en poids d'adhésif; préférablement, le produit d'emballage comprenant moins de 2.5% d'amidon.

4. Produit d'emballage fait par moulage à chaud d'au moins une matière Airlaid non-tissée avec de l'eau et au moins une couche de textile inélastique étant arrangée entre ladite matière Airlaid et au moins une pièce à presser durant le moulage, ledit produit d'emballage comprenant
- des fibres naturelles,
- de 2% à 10% en poids sec d'adhésif; préférablement de 5% à 8% en poids sec d'adhésif,
- moins de 2% en poids sec de résine thermodurcissable; préférablement moins de 1 % en poids sec de résine thermodurcissable et plus préférablement ne comportant substantiellement pas de résine thermodurcissable, et
- substantiellement non pas de fibres thermoplastiques.

5. Produit d'emballage selon l'une quelconque des revendications précédentes, le produit d'emballage étant hydrophobe et comprenant de 0.1 à 1% de surfactant hydrophobe; préférablement, le produit d'emballage comprend de 0.1 à 0.6% de surfactant hydrophobe et plus préférablement, le produit d'emballage comprend de 0.1 à 0.6% d'alkyl cétène dimère.

6. Produit d'emballage selon l'une quelconque des revendications précédentes comprenant en outre au moins une zone anti-choc; préférablement, cette zone anti-choc comprend une surface où la pression du produit d'emballage est plus légère que d'autres parties du produit d'emballage durant la fabrication du produit d'emballage par moulage à chaud.

7. Produit d'emballage selon la revendication 6, la au moins une zone anti-choc étant arrangée de manière à former une connexion entre le produit d'emballage et un objet à être emballé dans le produit d'emballage pendant l'utilisation.

8. Produit d'emballage selon l'une quelconque des revendications précédentes comprenant en outre au moins une protrusion pour faciliter le dénichement des produits d'emballage; préférablement, la protrusion comprend une surface où la pression du produit d'emballage est plus légère que d'autres parties du produit d'emballage durant la fabrication du produit d'emballage par moulage à chaud.

9. Produit d'emballage selon la revendication 8, la au moins une protrusion étant arrangée dans une zone du produit d'emballage ne formant pas partie d'une surface de visualisation du produit et/ou dans une zone du produit d'emballage ne formant pas partie d'une surface de support du produit d'emballage durant l'utilisation.

10. Produit d'emballage selon les revendications 1 à 9, les fibres thermoplastiques étant des fibres à deux composants; préférablement d'un premier matériau thermoplastique avec un noyau à un point de fusion relativement haut et d'un deuxième matériau thermoplastique avec une surface à un point de fusion relativement faible.

11. Produit d'emballage selon l'une quelconque des revendications 1 à 10 ayant une structure stratifiée.

12. Produit d'emballage selon la revendication 11 ayant au moins une première couche comprenant des fibres naturelles et au moins une deuxième couche, chaque deuxième couche étant sélectionnée à partir du groupe consistant de
- une barrière contre la vapeur, telle qu'un matériau basé sur le polyéthylène,
- une couche plastique,
- une composition hydrophobe ou une couche comprenant une composition hydrophobe, une couche de couverture d'une valeur esthétique plus élevée que la première couche, telle qu'une couche comprenant des fibres de papier vierges,
- une couche de renforcement ou une couche partielle, telle qu'une couche de couverture partielle comprenant des fibres naturelles,
- une couche de papier ou une étiquette,
- une couche de matière fluff colorée.

13. Produit d'emballage selon les revendications 11 ou 12, le produit d'emballage formant une structure sandwich de manière à ce qu'une partie de surface intérieure et une partie de surface extérieure du produit d'emballage alent une raideur plus élevée ou un meilleur aspect qu'une partie centrale du produit d'emballage.

14. Matière fluff pour fabriquer un produit d'emballage en forme tridimensionnelle selon la revendication 1, comprenant une collection homogène Airlaid non-tissée de
- fibres naturelles,
- moins de 15% en poids sec de fibres thermoplastiques; préférablement de 0.25 à 10% en poids sec de fibres thermoplastiques et plus préférablement de 0.5 à 5% en poids sec de fibres thermoplastiques, moins de 10% en poids sec d'adhésif; préférablement moins de 5% en poids sec d'adhésif, et
- moins de 2% en poids sec de résine thermodurcissable; préférablement moins de 1% en poids sec de résine thermodurcissable et plus préférablement ne comportant substantiellement pas de résine thermodurcissable.

15. Fluff selon la revendication 14, comprenant moins de 2.5% en poids d'adhésif; préférablement le produit d'emballage comprenant moins de 2.5% d'amidon.

16. Matière fluff selon la revendication 14 ne comprenant substantiellement pas de fibre thermoplastique.

17. Matière fluff selon la revendication 14 ne comprenant substantiellement pas d'adhésif.

18. Fluff selon l'une quelconque des revendications 14 à 17, comprenant en outre de 0.1 à 1 % de surfactant hydrophobe; préférablement, le fluff comprenant de 0.1 à 0.6% de surfactant hydrophobe et plus préférablement, le fluff comprenant de 0.1 à 0.6% d'alkyl cétène dimère.

19. Fluff selon l'une quelconque des revendications 14 à 18, le fluff étant comprimé dans un sens machine ou une direction transversale; préférablement, le fluff est crêpé ou ondulé d'une période de 1 à 10 mm.

20. Fluff selon l'une quelconque des revendications 14 à 19, les fibres thermoplastiques étant des fibres à deux composants, préférablement d'un premier matériau thermoplastique avec un noyau à un point de fusion relativement haut et d'un deuxième matériau thermoplastique avec une surface à un point de fusion relativement faible.
